# EUROPEAN PATENT APPLICATION

(11) **EP 3 747 752 A1**
(43) Date of publication of application: **09.12.2020**
(21) Application number: 18903629.6
(22) Date of filing: 30.01.2018
(51) Int. Cl.: B62M 6/00, G05B 15/02

(54) **CONTROL METHOD AND DEVICE FOR ELECTRIC BICYCLE, AND ELECTRIC BICYCLE**

(71) Applicant: Neutron Holdings, Inc., Dover, Delaware 19901 (US); Zhang, Xi, Shenzhen, Guangdong 518034 (CN)
(72) Inventor: ZHANG, Xi, Shengzhen, Guangdong 518034 (CN)
(74) Representative: Zimmermann, Tankred Klaus
(86) International application number: PCT/CN2018/074578
(87) International publication number: WO 2019/148322

(57) **Abstract**

A control method and device for a motorcycle and a motorcycle are disclosed by the present disclosure. The method for controlling a motorcycle includes: obtaining the current environment parameter where the motorcycle is currently located; and controlling the power output of the motorcycle according to the environment parameter.

## Description

### TECHNICAL FIELD

The present disclosure relates to the field of controlling rental equipment, for example, to a method and device for controlling a motorcycle and a motorcycle.

### BACKGROUND

In the field of leasing of shared bicycles, various types of shared bicycles are becoming more and more common and have become an important part of urban transportation. Among them, the popularity of motorcycles, such as electric bicycles, has brought great convenience to users' riding.

At present, electric power assisted vehicles are generally equipped with control equipment, including torque sensors, motors and motor controllers. The control method is that the controller obtains torque data measured from the wheel or axle through the torque sensor, and then controls the power output of the motor according to the torque data to achieve a labor-saving riding effect and achieve a good user riding experience.

However, the control of the motor based on the torque data measured by the torque sensor will make the vehicle's speed control singular and bring certain safety risks.

### SUMMARY

The embodiments of the present disclosure provide a method and device for controlling a motorcycle and a motorcycle, which can flexibly control the running of the motorcycle according to environmental parameter, thereby improving the safety of the user when traveling.

A method for controlling a motorcycle, comprises: obtaining current environment parameter where the motorcycle is currently located; and controlling a power output of the motorcycle according to the environment parameter.

A control device for a motorcycle, comprising: an environment parameter acquisiting module, is configured to acquire an environment parameter where the motorcycle is currently located; and a power output controlling module, is configured to control the power output of the motorcycle according to the environment parameter.

A motorcycle, comprises a memory, a controller and a motor, wherein: the memory is configured to store one or more programs; the controller is configured to execute programs to implement the method for controlling the motorcycle; the motor is configured to provide assistance for the motorcycle under the control of the controller.

An embodiment of the present disclosure further provides a computer-readable storage medium storing computer-executable instructions, wherein the computer-executable instructions are configured to execute the method for controlling a motorcycle.

The method and device for controlling a motorcycle and the motorcycle provided by the embodiments of the present disclosure can flexibly control the power output of the motorcycle according to the obtained environmental parameter of the motorcycle. That is, the motorcycle can be integrated the user needs and external conditions during the course of the riding. Real-time and flexible control of the power output of the motorcycle is achieved, thus solving the problem that the motorcycle can only control the power output of the motorcycle by using power assistance parameter (such as torque data measured by the torque sensor on the motorcycle) and improving the safety of user during the course of riding.

### BRIEF DESCRIPTION OF THE DRAWINGS

FIG. 1 shows a flowchart of a method for controlling a motorcycle disclosed by an embodiment of the present disclosure;
FIG. 2 is a flowchart of a method for controlling a motorcycle disclosed by an another embodiment of the present disclosure;
FIG.3 is a structural block diagram of a motorcycle control device disclosed by an embodiment of the present disclosure; and
FIG. 4 is a schematic structural diagram of a motorcycle disclosed by an embodiment of the present disclosure.

### DETAILED DESCRIPTION

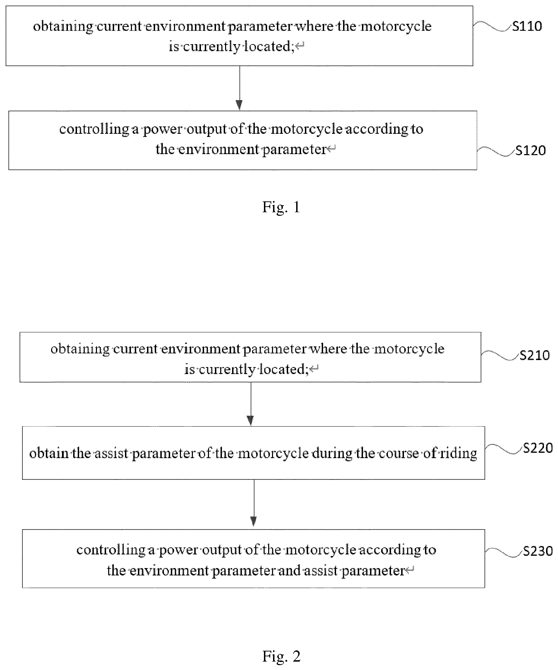

FIG. 1 is a flowchart of a method for controlling a motorcycle in accordance with an embodiment of the present disclosure. The method is applicable to a situation where a user rides a motorcycle in a poor external environment such as weather, geographical environment, and the like. The motorcycle can be an electric moped or an electric scooter, for example, it can be a pile-free shared vehicle that currently has a lease property. As shown in FIG. 1, the method specifically includes the followings.

In S110, the environment parameter where the motorcycle is currently located are obtained.

In one embodiment, the environment parameter may refer to the weather, geographic location, and the like of the motorcycle location. For example, the environment parameter may be at least one of local wind speed, rainfall, snowfall, haze, sandstorm, time, and geography. In an embodiment, the time environment parameter may refer to the evening; the geographical environment parameter may be uphill, downhill, and the like.

The motorcycle can be provided with communication units, such as the Global System for Mobile Communication (GSM) communication module, the Subscriber Identification Module (SIM) card, and the General Packet Radio Service (GPRS), Bluetooth or Wireless Fidelity (Wireless Fidelity, WIFI), etc. The communication units can be used to communicate with a remote server in real time to obtain the current environment parameter of the motorcycle. The communication units are also based on Bluetooth, WIFI and other short-range wireless communications to establish communication with the user's mobile terminal connection to obtain the current environment parameter of the motorcycle.

In an embodiment according to the present disclosure, obtaining the current environment parameter the motorcycle may include: receiving the current environment parameter of the current motorcycle location sent by the cloud server which is as the current environment parameter of the motorcycle; or by setting a smart card on the terminal of the motorcycle to obtain the current environment parameter of the motorcycle. Some specific sensors may also be equipped with the bicycle, such as wind speed sensors, acceleration sensors, and angle sensors to obtain the environment parameter of the bicycle's location.

In an embodiment according to the present disclosure, the cloud server can be regarded as a cloud data management system, a cloud data processing system, and a cloud data control system. The cloud server establishes wireless communication with a number of motorcycles, and obtains the geographical locations of the motorcycles and the environment corresponding to the geographical locations in real time. The smart card is used for local query based on wireless communication to obtain the current environment parameter of the motorcycle. For example, the smart card may be a SIM card.

In one embodiment according to the present disclosure, the motorcycle establishes a communication connection with the cloud server through long-distance communication such as GPRS. The cloud server sends the environment parameter to the motorcycle after querying and obtaining the environment parameter according to the current location of the motorcycle. Motorcycles communicate with the environment parameter server, based on the universal mobile communication network such as 3G or 4G, through the SIM card set on the motorcycle to query the remote service server to obtain the current environment parameter of the motorcycle.

S120. Control the power output of the motorcycle according to the environment parameter.

In an embodiment according to the present disclosure, the power output may be used to provide assistance for a motorcycle, for example, it may be output by a motor on the motorcycle. The motorcycle can also have a controller for controlling the operation of the motor. In one embodiment according to the present disclosure, the power output of the motorcycle is adaptively adjusted according to a certain rule according to the change of the environment parameter.

An embodiment of the present disclosure provides a method for controlling a motorcycle, by flexibly controlling the power output on the motorcycle according to the obtained current environment parameter of the motorcycle, such as the power output of a motor. The solution provided by the present disclosure enables the motorcycle to travel considering of Comprehensive user needs and external conditions, real-time and flexible control of the power output of the motor. The solution avoids the problem when the motorcycle is in a certain external environment, only by assist parameter (such as torque data measured by the torque sensor on the motorcycle) is used to control the motor, thus improving the safety of the user's travel.

FIG. 2 is a flowchart of a method for controlling a motorcycle according to an embodiment of the present disclosure. Referring to FIG. 2, the method includes the followings.

In S210, obtain the environment parameter where the motorcycle is currently located.

In one embodiment according to the present disclosure, the environment parameter may refer to the weather at the location of the motorcycle, geographic location of the motorcycle location. For example, the environment parameter may be at least one of local wind speed, rainfall, snowfall, haze, sandstorm, time, and geography. In an embodiment according to the present disclosure, the time environment parameter may refer to the evening; the geographical environment parameter may be uphill, downhill, and the like.

In S220, obtain the assist parameter of the motorcycle during the course of riding.

In one embodiment according to the present disclosure, the assist parameter may refer to a parameter used to provide power for a motorcycle, and may be at least one of a torque parameter, a cadence parameter, a speed parameter, and an acceleration. A torque sensor is provided on the motorcycle, which can be used to obtain the torque parameter in real time according to the user's pedaling force during the operation of the motorcycle. A speed sensor is also provided on the motorcycle to measure the speed of the motorcycle in real time. The pressure sensor obtains cadence parameter and the like.

It should be noted that step S210 may be performed before or after step S220. The two steps may also performed at the same time.

In S230, control the power output of the motorcycle according to the environment parameter and the assist parameter.

In an embodiment according to the present disclosure, the power output may be used to provide assistance for a motorcycle. For example, the power output may be output by a motor on the motorcycle. The motorcycle can also have a controller for controlling the operation of the motor.

In the method for controlling a motorcycle in the related art, the controller controls the operation of the motor according to the assist parameter only. For example, on rainy days or in the evening, when the user's pedaling force is large, the assist parameter obtained is also larger, resulting in a higher riding speed of the user, which brings certain safety risks.

In order to improve the safety of the user's travel, the solution provided by the embodiment of the present disclosure comprehensively considers external environment factors and assisting parameter to control the motor of the motorcycle. In an embodiment, controlling the power output of the motorcycle according to the environment parameter and the assist parameter may be reducing the power output of the motorcycle according to the environment parameter and the assist parameter.

In one embodiment according to the present disclosure, when the user is riding a motorcycle on a rainy day, because the road surface is slippery and there is water on the rainy day, the power output, corresponding to the original assist parameter, can be reduced by a certain proportion according to the amount of water on the road, such as motor output power is reduced, to achieve safe travel.

In addition, when the environment parameter are uphill in geography, in order to ensure safe travel, the power output of the motorcycle can be increased.

An embodiment of the present disclosure provides a method for controlling a motorcycle, which can flexibly control the power output, such as motor power output, on the motorcycle by using the obtained environment parameter of the motorcycle and the assist parameter of the motorcycle during operation. When the motorcycle is in a certain external environment, the limitation of controlling the motor by only assisting parameter is solved, and the safety of the user's travel is improved.

In an embodiment according to the present disclosure, reducing the power output of the motorcycle according to the environment parameter and the assisting parameter may include at least one of the following situations, which can achieve flexible control of the motorcycles according to the environmental parameter and the assisting parameter under different environment parameter. The purpose of safe travel is achieved.

1) If the direction of the local wind speed as the environment parameter is the same as that of the motorcycle, the power output of the motorcycle can be reduced according to the first preset rule and the torque parameter as the assist parameter.

In an embodiment according to the present disclosure, the first preset rule refers to how to adjust the output power of the power on the motorcycle according to the wind speed and torque parameter. That is, the first preset rule may be to determine the power output of the motorcycle according to the wind speed and the torque parameter. For example, if the torque parameter is the user's pedaling force torque collected by the torque sensor, and the power output is the motor output power on the motorcycle, the first preset rule may be a preset comparison table. such as when the wind speed is greater than level 3 and less than or equal to 4, the output power of the motor will be reduced by 20%. That is, the output power of the motor can be reduced by 20% based on the value calculated based on the user's pedaling torque. When the wind speed is greater than level 5, the output of the motor will be reduced by 50%. That is, the output power of the motor can be reduced by 50% based on the value calculated based on the user's pedaling force torque, etc.

The data of the torque parameter, the magnitude of the wind speed, and the output power of the motor provided by the embodiments of the present disclosure are merely examples, and the embodiments of the present disclosure do not limit the content of the torque parameter, the wind speed, and the output power of the motor in the first preset rule.

(2) When the motorcycle is under the condition of rain or snow, the power output of the motorcycle is reduced according to the second preset rule and the torque parameter as a boost parameter based on the rainfall or snowfall in the environment parameter.

In an embodiment of the present disclosure, the second preset rule refers to how to adjust the output power of the motor on the motorcycle according to the rainfall or snowfall amount and the torque parameter. That is, the second preset rule may be based on the rainfall amount, snowfall amount and the torque parameter to determine the power output of the motorcycle. In an embodiment, the power output is the output power of the motor on the motorcycle. The rainfall amount may be divided into light rain, moderate rain, heavy rain, etc. The second preset rule may be a preset comparison table. For example, when the rainfall is less than 5mm, the output power of the motor may remain unchanged. That is, the output power of the motor may be calculated based on the torque parameter. When the rainfall is greater than 5mm and less than 15mm, the output power of the motor may be reduced by 10%. That is, the output power may be reduced by 10% based on the value calculated based on the torque parameter. When the rainfall is greater than 15mm and less than 25mm, the output power of the motor may be reduced by 20%. That is, the output power of the motor may be may be reduced by 20% based on the value calculated based on the torque parameter. When the rainfall is greater than 25mm and less than 50mm, the output power of the motor may be reduced by 50%. That is, the output power of the motor may be reduced by 50% based on the value calculated based on the torque parameter.

In another embodiment according to the present disclosure, the amount of snowfall may be divided into light snow, medium snow, heavy snow, etc. When the snowfall is less than 1mm (light snow), the output power of the motor may be maintained unchanged or reduced to 10%. That is, the output of the motor may be a value calculated based on the torque parameter, or it may be reduced by 10% based on the value calculated based on the torque parameter. When the snowfall is greater than 1mm and less than 3mm (medium snow), the output power of the motor may be reduced by 20 %. That is, the output power of the motor may be reduced by 20% based on the value calculated based on the torque parameter. When the snowfall is greater than 5mm (heavy snow), the output power of the motor may be reduced by 50%. That is, the output power of the motor may be reduced by 50% based on the value calculated based on the torque parameter.

The data of the amount of rainfall (or snowfall), the torque parameter, and the output power of the motor provided by the embodiments of the present disclosure are merely examples. The embodiments of the present disclosure do not take into limit the account the torque parameter, rainfall or snowfall in the second preset rule and the motor output power is limited.

(3) When the motorcycle is in a haze condition, the power output of the motorcycle is reduced according to the third preset rule and the torque parameter as a boost parameter based on the haze concentration in the environment parameter.

In an embodiment of the present disclosure, the haze concentration may be represented by PM2.5 (Particulate Matter, PM). For example, the haze may be divided into three levels: medium haze, severe haze and much severe haze. In one embodiment, the power output is the output power of the motor on the motorcycle. The third preset rule may be how to adjust the output power of the motor on the motorcycle according to the haze concentration and torque parameter, that is, the power output of a motorcycle may be determined based on the haze concentration and torque parameter according to the third preset rule. For example, when the haze concentration is greater than 115ug / m³ and less than 150ug / m³ (moderate haze), the output power of the motor may be reduced by 10%. That is, the output power of the motor may be reduced 10% based on the value calculated based on the torque parameter. When the haze concentration is greater than 150ug / m³ and less than 250ug / m³ (severe haze), the output power of the motor may be reduced by 20%. That is, the output power of the motor may be reduced 20% based on the value calculated based on the torque parameter. When the haze concentration is greater than 250ug / m³ (much severe haze), the output power of the motor may be reduced by 50% to 80%. That is, the output power of the motor may be reduced by 50% to 80% based on the value calculated based on the torque parameter.

The torque parameter, the amount of haze concentration and the output power of the motor provided by the embodiments of the present disclosure are just an example, and the embodiment does not limit the content of the torque parameter, the haze concentration and the output power of the motor in the third preset rule.

(4) When the motorcycle is in a preset period of time, the power output of the motorcycle is reduced according to the fourth preset rule and the torque parameter as a boost parameter.

In an embodiment of the present disclosure, the preset time period may refer to the evening, which is related to the season, and may be determined according to local actual conditions. For example, in the summer, the preset time period is from 8 pm to 5 am the next day; in winter, 6pm to 7am the next day. In an embodiment, the power output power may be the output power of the motor on the motorcycle, and the fourth preset rule may refer to how to adjust the output power of the motor on the motorcycle according to a preset time period and torque parameter. That is, the fourth preset rules may be used to determine the power output according to the season, the preset time period and the torque parameter. The fourth preset rule may also be a preset comparison table. For example, in summer, when a user rides a motorcycle between 8 pm and 10 pm, the output power of the motor may be reduced by 20%. That is, the output power of the motor may be reduced by 20% based on the value calculated based on the torque parameter. The specific reduction ratio may be determined according to actual conditions, and is not limited herein.

The data of the season, the preset time period, and the output power of the motor provided in this embodiment are only an example. This embodiment does not limit the content of the torque parameter, the season, the preset time period, and the output power of the motor in the fourth preset rule.

In addition to the situations discussed above, it may also include the followings.

(5) When the motorcycle is in a dust storm situation, the power output of the motorcycle is reduced according to the fifth preset rule and the torque parameter as a boost parameter according to the concentration of the sand storm in the environment parameter.

In an embodiment of the present disclosure, the concentration of the dust storm may be the concentration of dust particulate matter. For example, the dust storm may be classified into a weak sand storm, a medium-intensity sand storm, and a strong sand storm. Exemplarily, the power output power may be the output power of the motor on the motorcycle, and the fifth preset rule may refer to how to adjust the output power of the motor on the motorcycle according to the concentration and torque parameter of the sand storm. That is, the power output is determined according to the dust storm concentration and torque parameter and the fifth preset rule. In one embodiment, the concentration of the sandstorm may correspond to the visibility, and the greater the concentration, the lower the visibility. For example, when the visibility is greater than 500m and less than 1000m (weak sandstorm), the output power of the motor may be reduced by 10%, that is, the output power of the motor may be reduced by 10% based on the value calculated based on the torque parameter. When the visibility is greater than When 200m and less than 500m (medium intensity dust storm), the output power of the motor may be reduced by 20%, that is, the output power of the motor may be reduced by 20% based on the value calculated based on the torque parameter. When the visibility is less than 200m (strong Sand storm), the output power of the motor may be reduced by 50% to 80%, that is, the output power of the motor may be reduced by 50% to 80% based on the value calculated based on the torque parameter, and so on.

The data of the torque parameter, the concentration of the sandstorm and the output power of the motor provided in this embodiment of the present disclosure are merely examples, and the content of the torque parameter, the concentration of sandstorm and the output power of the motor in the fifth preset rule is not limited in this embodiment.

(6) When the motorcycle is on a downhill condition, the power output of the motorcycle is reduced according to the sixth preset rule and the torque parameter as a boost parameter.

In an embodiment according to the present disclosure, the power output power may be the output power of the motor on the motorcycle. The sixth preset rule refers to how to adjust the output power of the motor on the motorcycle according to the steepness of the slope and the torque parameter, that is, the sixth preset rule may determine the power output according to the steepness of the downhill slope and the torque parameter. In an embodiment, the sixth preset rule may be a preset comparison table. For example, when the slope is less than 10, the output power of the motor will be reduced by 10%, that is, the output power of the motor may be reduced by 10% based on the value calculated based on the torque parameter. When the slope is greater than 10 and less than 30, the output power of the motor may be reduced by 20%, that is, the output power of the motor may be reduced by 20% based on the value calculated based on the torque parameter. When the slope is greater than 30 and less than 60, the output power of the motor may be reduced by 50%, that is, the output power of the motor can be reduced by 50% based on the value calculated based on the torque parameter. When the slope is greater than 60, the output power of the motor may be reduced by 80%, that is, the output power of the motor may be reduced by 80% based on the value calculated based on the torque parameter, and so on.

The data of the torque parameter, downhill gradient and motor output power provided in this embodiment of the present disclosure is only an example, and this embodiment does not limit the content of the torque parameter, downhill gradient and motor output power in the sixth preset rule.

(7) When the motorcycle is uphill, the power output of the motorcycle is increased according to the seventh preset rule and the torque parameter as a boost parameter.

In an embodiment according to the present disclosure, the power output may be the output power of the motor on the motorcycle. The seventh preset rule is similar to the sixth preset rule, and it also refers to how to adjust the output of the motor on the motorcycle according to the steepness of the slope and the torque parameter. That is, the seventh preset rule may determine the power output according to the steepness of the uphill and the torque parameter. For example, when the slope is less than 10, the output power of the motor may increase by 10%, that is, the output power of the motor may be reduced by 10% based on the value calculated based on the torque parameter. When the slope is greater than 10 and less than 30, the output power of the motor may increase by 20%, that is, the output power of the motor may be reduced by 20% based on the value calculated based on the torque parameter. When the slope is greater than 30 and less than 60, the output of the motor may increase by 50%, that is, the output power of the motor may be reduced by 50% on the basis of the value calculated based on the torque parameter. When the slope is greater than 60, the output of the motor may increase by 80%, that is, the output power of the motor may be reduced by 80% on the basis of the value calculated based on the torque parameter.

The data of the torque parameter, the uphill slope and the output power of the motor provided in this embodiment of the present disclosure is only an example, and the content of the torque parameter, the uphill slope and the motor output power in the seventh preset rule is not limited in the embodiment of the present disclosure.

(8) When the server detects that the motorcycle is riding to a high traffic accident area or kindergarten, it will also send information to the motorcycle, and the controller of the motorcycle controls the motor to adjust the power output power accordingly.

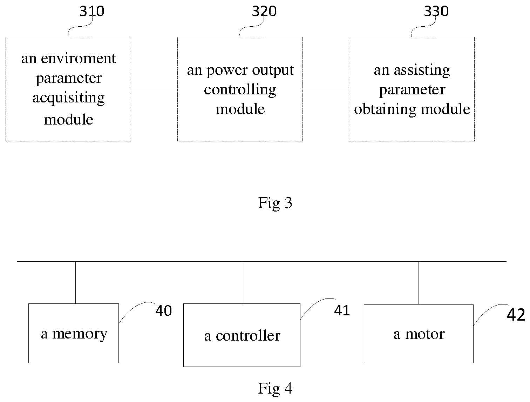

FIG. 3 is a schematic structural diagram of a control device for a motorcycle according to an embodiment of the present disclosure. As shown in FIG. 3, the device includes an environment parameter acquisiting module 310 and a power output controlling module 320.

The environmental parameter obtaining module 310 is configured to obtain the current environment parameter of the motorcycle;

The power output controlling module 320 is configured to control the power output of the motorcycle according to the environment parameter.

Optionally, the above device may further include the followings.

The assisting parameter obtaining module 330 is configured to obtain the assisting parameter of the motorcycle during operation.

The power output controlling module 320 is further configured to control the power output of the motorcycle according to the environment parameter and the assist parameter.

According to an embodiment of the present disclosure, a control device for a motorcycle is configured to flexibly control the power output of the motorcycle, especially the power output of the motor, according to the obtained environment parameter of the motorcycle and the assist parameter of the motorcycle during operation. That is, it can enable the motorcycle to integrate the user's needs and external conditions during the travel process, and control the power output of the motor in real time and flexibly. When the motorcycle is in a certain external environment, it avoids the limitation that the control of the motor is realized only through the assistance parameter such as the torque data measured by the torque sensor on the motorcycle. Thus the safety of the user's travel is improved.

Optionally, the environment parameter acquisiting module 310 may be specifically configured as followings.

The current environment parameter of the current location of the motorcycle from the cloud server is as the current environment parameter of the motorcycle; or the current environment parameter of the motorcycle obtained through the smart card set on the terminal of the motorcycle is as the current environment parameter of the motorcycle.

Optionally, the environment parameter may include at least one of local wind speed, rainfall, snowfall, haze, sandstorm, time, and geography. The assisting parameter include at least one of torque parameter, cadence parameter, and speed parameter.

Optionally, the power output controlling module 320 may be specifically configured to reduce the power output of the motorcycle according to the environment parameter and the assist parameter.

Optionally, the power output controlling module 320 may be specifically set to at least one of the following situations.

If the direction of the local wind speed as the environment parameter is the same as that of the motorcycle, the power output of the motorcycle is reduced according to the first preset rule and the torque parameter as the assist parameter, wherein the first preset rule determines the power output according to the wind speed and the torque parameter.

When the motorcycle is in the condition of rainfall or snowfall, the power output of the motorcycle is reduced according to the second preset rule and the torque parameter as a boost parameter according to the rainfall or snowfall in the environment parameter, wherein the second preset rule determines the power output according to the rainfall or snowfall amount and the torque parameter.

When the motorcycle is in a haze condition, the power output of the motorcycle is reduced according to the third preset rule and the torque parameter as a boost parameter according to the haze concentration in the environment parameter, wherein the third preset rule determines the power output according to the haze concentration and the torque parameter.

When the motorcycle is in a preset period of time, the power output of the motorcycle is reduced according to a fourth preset rule and a torque parameter as a boosting parameter, wherein the power output is determines according to the fourth preset rule, the season, the preset time period, and the torque parameter.

FIG. 4 is a schematic structural diagram of a motorcycle according to an embodiment of the present disclosure. As shown in FIG. 4, the motorcycle comprises a memory 40, a controller 41, and a motor 42. Optionally, the memory 40, the controller 41 and the motor 42 of the motorcycle may be connected through a bus or other methods. In FIG. 4, connection through a bus is taken as an example.

The memory 40 is a computer-readable storage medium, and may be used to store software programs, computer-executable programs, and modules, such as modules corresponding to a control method of an electric moped in the embodiment of the present disclosure (for example, the environmental parameter acquisiting module 310 and power output controlling module 320, which are used to control device). The controller 41 executes various functional applications and data processing of the device by running software programs, instructions, and modules stored in the memory 40, that is, implementing the above-mentioned control method of the electric moped.

The memory 40 may mainly include a storage program area and a storage data area, wherein the storage program area may store an operating system and application programs required for at least one function, the storage data area may store data created according to the use of the terminal, and the like. In addition, the memory 40 may include a high-speed random access memory, and may further include a non-volatile memory, such as at least one magnetic disk storage device, a flash memory device, or other non-volatile solid-state storage device. In some examples, the memory 40 may further include memories remotely set with respect to the controller 41, and these remote memories may be connected to the device through a network. Examples of the above network include, but are not limited to, the Internet, an intranet, a local area network, a mobile communication network, and combinations thereof.

The motor 42 may be used to provide assistance for a motorcycle under the control of the controller 41.

This embodiment of the present disclosure provides a motorcycle, by flexibly controlling the power output on the motorcycle according to the obtained environment parameter of the motorcycle, which enable the motorcycle to integrate user needs and external conditions in real time, Flexible control of motor power output solves the limitation of motor control only by assisting parameter (such as torque data measured by torque sensors on the motorcycle) when the motorcycle is in a certain external environment, improving the user Travel safety.

The embodiment also provides a storage medium containing computer-executable instructions. When the computer-executable instructions are executed by a computer processor, the computer-executable instructions are configured to execute a method for controlling a motorcycle. The method includes the followings.

Obtaining the current environment parameter of the motorcycle;

Controlling the power output of the motorcycle according to the environment parameter.

Optionally, when the computer-executable instructions are executed by a computer processor, the computer-executable instructions may be configured to execute a technical solution of a method for controlling a motorcycle provided by any embodiment of the present disclosure.

### INDUSTRIAL APPLICABILITY

The method for controlling a motorcycle according to the embodiments of the present disclosure, flexibly controlling the power output on the motorcycle according to the obtained environment parameter of the motorcycle, that is, the motorcycle integrates the user's needs and external conditions during the travel. Real-time and flexible control of the power output of the motor improves the travel safety of the user.

## Claims

1. A method for controlling a motorcycle, comprising:
obtaining current environment parameter where the motorcycle is currently located; and
controlling a power output of the motorcycle according to the environment parameter.

2. The method according to claim 1, wherein before or after obtaining the current environment parameter where the motorcycle is currently located, further comprising:
obtaining an assist parameter of the motorcycle during operation;
controlling the power output of the motorcycle according to the environment parameter comprising: controlling the power output of the motorcycle according to the environment parameter and the assist parameter.

3. The method according to claim 1 or 2, wherein obtaining the environment parameter where the motorcycle is currently located comprising:
receiving the environment parameter where the motorcycle is currently located sent by a cloud server as the current environment parameter of the motorcycle; or
obtaining the environment parameter where the motorcycle is currently located through a smart card provided on the on-board terminal of the motorcycle.

4. The method according to claims 2 or 3, wherein:
the environment parameter comprise at least one of local wind speed, rainfall, snowfall, haze, sandstorm, time, and geography; and
the assisting parameter comprise at least one of a torque parameter, a cadence parameter and a speed parameter.

5. The method according to claims 2, 3 or 4, wherein the controlling the power output of the motorcycle according to the environment parameter and the assist parameter comprises:
reducing the power output of the motorcycle according to the environment parameter and the assist parameter.

6. The method according to claim 5, wherein reducing the power output of the motorcycle according to the environment parameter and the assist parameter comprises at least one of the following situations:
if a direction of the local wind speed as an environment parameter is detected to be the same as that of the motorcycle, the power output of the motorcycle is reduced according to a first preset rule and the torque parameter as a boost parameter; wherein the power output is determined according to the first preset rule, the wind speed and the torque parameter;
when the motorcycle is in a rain or snow condition, the power output of the motorcycle is reduced according to a second preset rule, the torque parameter as a boost parameter and the rainfall or snowfall in the environment parameter; wherein the power output is determined according to the second preset, the rainfall or snowfall amount, and the torque parameter;
when the motorcycle is in a haze situation, the power output of the motorcycle is reduced according to a third preset rule, a torque parameter as a boost parameter and the haze concentration in the environment parameter; wherein the power output is determined according to the third preset rules, the haze concentration and the torque parameter; and
when the motorcycle is in a preset period of time, the power output of the motorcycle is reduced according to a fourth preset rule and the torque parameter as a boosting parameter; wherein the power output is determined according to the fourth preset rule, a season, the time period and the torque parameter.

7. A control device for a motorcycle, comprising:
an environment parameter acquisiting module, is configured to acquire an environment parameter where the motorcycle is currently located; and
a power output controlling module, is configured to control the power output of the motorcycle according to the environment parameter.

8. The device according to claim 7, wherein the device further comprising:
a power assistance parameter acquisiting module, is configured to obtain power assistance parameter of the motorcycle during operation; and
the power output controlling module is specifically configured as: the power output of the motorcycle is controlled according to the environment parameter and the assist parameter.

9. The device according to claim 7 or 8, wherein the environment parameter acquisiting module is specifically configured to:
receiving the environment parameter, where the motorcycle is currently located, sent by a cloud server as the current environment parameter of the motorcycle; or
obtaining the environment parameter where the motorcycle is currently located through a smart card provided on the on-board terminal of the motorcycle.

10. The device according to claim 8 or 9, wherein:
the environment parameter comprises at least one of local wind speed, rainfall, snowfall, haze, sandstorm, time, and geography; and
the assisting parameter comprises at least one of a torque parameter, a cadence parameter and a speed parameter.

11. The device according to claim 8, 9 or 10, wherein the power output controlling module is specifically configured to:
reduce the power output of the motorcycle according to the environment parameter and the assist parameter.

12. The device according to claim 11, wherein the power output controlling module is specifically configured to have at least one of the following situations:
if a direction of the local wind speed as an environment parameter is detected to be the same as that of the motorcycle, the power output of the motorcycle is reduced according to a first preset rule and the torque parameter as a boost parameter; wherein the power output is determined according to the first preset rule, the wind speed and the torque parameter;
when the motorcycle is in a rain or snow condition, the power output of the motorcycle is reduced according to a second preset rule, the torque parameter as a boost parameter and the rainfall or snowfall in the environment parameter; wherein the power output is determined according to the second preset, the rainfall or snowfall amount, and the torque parameter;
when the motorcycle is in a haze situation, the power output of the motorcycle is reduced according to a third preset rule, a torque parameter as a boost parameter and the haze concentration in the environment parameter; wherein the power output is determined according to the third preset rules, the haze concentration and the torque parameter; and
when the motorcycle is in a preset period of time, the power output of the motorcycle is reduced according to a fourth preset rule and the torque parameter as a boosting parameter; wherein the power output is determined according to the fourth preset rule, a season, the time period and the torque parameter.

13. A motorcycle, comprising:
a memory, is configured to store one or more programs;
a controller, is configured to execute programs to implement the method for controlling the motorcycle according to any one of claims 1-6;
a motor, is configured to provide assistance for the motorcycle under the control of the controller.

14. A computer-readable storage medium storing computer-executable instructions for performing the method according to any one of claims 1-6.
